# FASCICULE DE BREVET EUROPEEN

(11) **EP 1 687 463 B1**
(45) Date de publication et mention de la délivrance du brevet: **25.04.2007**
(21) Numéro de dépôt: 04787470.6
(22) Date de dépôt: 28.09.2004
(51) Int. Cl.: C25D 13/08, C08F 2/58, C09D 5/44

(54) **PROCEDE DE FORMATION D'UN FILM POLYMERE SUR UNE SURFACE CONDUCTRICE OU SEMI-CONDUCTRICE DE L'ELECTRICITE PAR ELECTRO-GREFFAGE, SURFACES OBTENUES ET APPLICATIONS**
VERFAHREN ZUR AUSBILDUNG EINES POLYMERFILMS AUF EINER ELEKTRISCH LEITENDEN ODER HALBLEITENDEN FLÄCHE DURCH ELEKTROPFROPFEN, ERHALTENE FLÄCHEN UND ANWENDUNGEN DAVON
METHOD FOR FORMING A POLYMER FILM ON A SURFACE THAT CONDUCTS OR SEMICONDUCTS ELECTRICITY BY MEANS OF ELECTROGRAFTING, SURFACES OBTAINED, AND APPLICATIONS THEREOF

(30) Priorité: 01.10.2003 FR 0311491
(43) Date de publication de la demande: 09.08.2006
(73) Titulaire: COMMISSARIAT A L'ENERGIE ATOMIQUE, 75015 Paris (FR)
(72) Inventeur: BUREAU, Christophe, F-92150 Suresnes (FR); GONZALEZ, José, F-77820 le Chalet en Brie (FR); DENIAU, Guy, F-78610 Auffargis (FR)
(74) Mandataire: Goulard, Sophie
(86) Numéro de dépôt international: PCT/FR2004/002449
(87) Numéro de publication internationale: WO 2005/033378

(56) Documents cités:
- EP-B- 0 324 950
- US-A- 5 567 297
- US-A- 5 578 188
- US-A- 5 980 723
- US-B1- 6 375 821

## Description

La présente Invention est relative à un procédé de formation d'un film polymère sur une surface conductrice ou semi-conductrice de l'électricité par électro-greffage mettant en oeuvre une solution électrolytique renfermant un acide de Brönsted, ainsi qu'aux surfaces conductrices ou semi-conductrices de l'électricité obtenues en mettant en oeuvre ce procédé.

La réalisation de surfaces conductrices ou semi-conductrices de l'électricité recouvertes de films polymères présente un grand intérêt dans de nombreux domaines, en particulier pour la fabrication de composants électroniques ou de dispositifs optiques intégrés, pour la réalisation de dispositifs utilisables dans le domaine biomédical ou dans les biotechnologies (puces à ADN, puces à protéines, etc...), pour la protection anticorrosion, ainsi que pour toutes les modifications des propriétés superficielles des métaux ou des semi-conducteurs.

Il semble aujourd'hui admis que l'obtention de films polymères greffés par électro-greffage de monomères vinyliques activés sur des surfaces conductrices procède grâce à une électro-initiation de la réaction de polymérisation à partir de la surface, suivie d'une croissance des chaînes, monomère par monomère. Le mécanisme réactionnel de l'électro-greffage a notamment été décrit dans les articles de C. Bureau *et al.,* Macromolecules, 1997, **30**, 333 ; C. Bureau et J. Delhalle, Journal of Surface Analysis, 1999, **6(2)**, 159 et C. Bureau *et al.,* Journal of Adhesion, 1996, **58**, 101.

A titre d'exemple, le mécanisme réactionnel de l'électro-greffage de l'acrylonitrile par polarisation cathodique peut être représenté selon le SCHÉMA 1 ci-dessous, dans lequel la réaction de greffage correspond à l'étape n°1, où la croissance a lieu à partir de la surface ; l'étape n°2 étant la réaction parasite principale qui conduit à l'obtention d'un polymère non greffé :

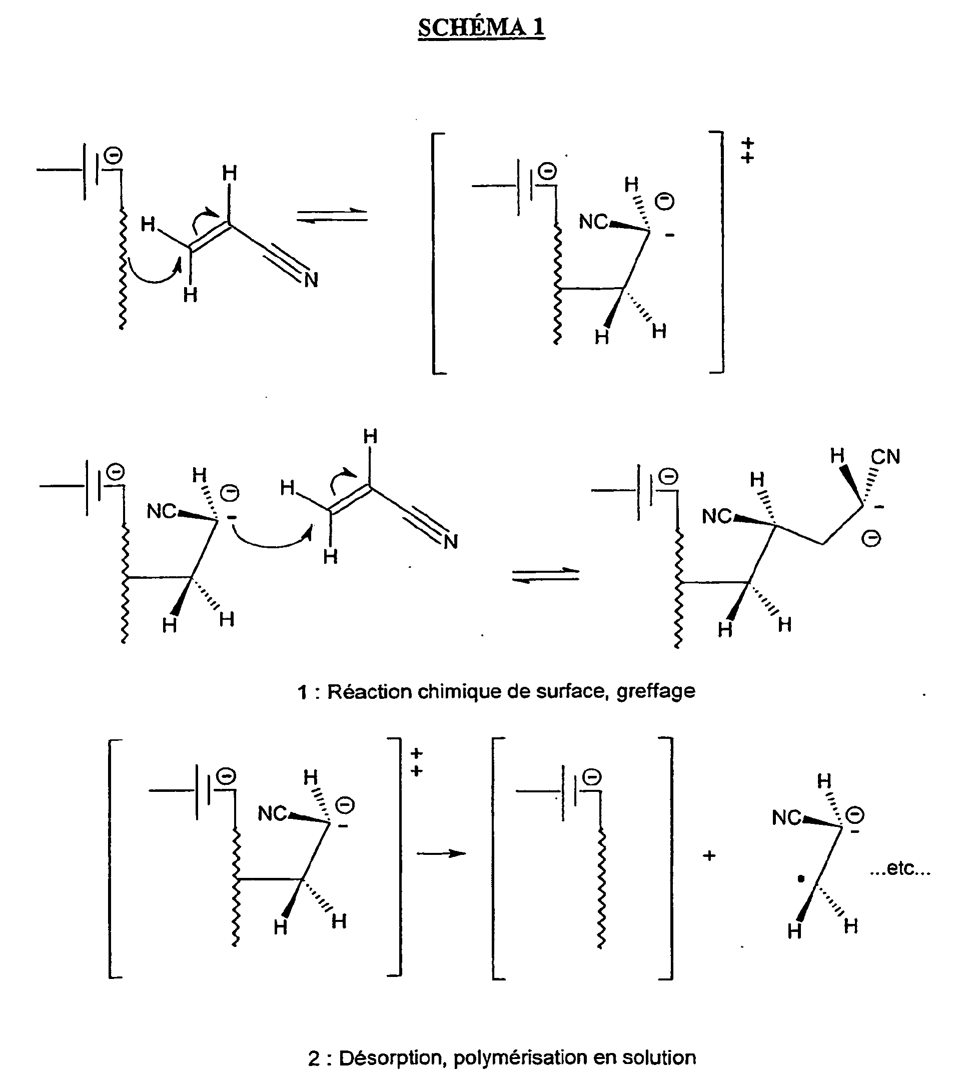

La croissance des chaînes greffées s'effectue donc par polymérisation purement chimique, c'est-à-dire indépendamment de la polarisation de la surface conductrice qui a donné lieu au greffage. Cette étape est donc sensible à (elle est en particulier interrompue par) la présence d'inhibiteurs chimiques de cette croissance.

Dans le schéma 1 ci-dessus, où l'on a considéré l'électro-greffage de l'acrylonitrile sous polarisation cathodique, la croissance des chaînes greffées s'effectue par polymérisation anionique. Cette croissance est interrompue notamment par des protons, et il a été démontré que la teneur en protons constitue même le paramètre majeur qui pilote la formation de polymère en solution, ainsi que les informations récupérées en cours de synthèse, notamment l'allure des voltammogrammes qui accompagnent la synthèse (voir en particulier l'article de C. Bureau, Journal of Electroanalytical Chemistry, 1999, 479, 43).

Un des objectifs recherché depuis les origines des travaux sur l'électro-greffage des polymères a été d'obtenir des films épais et homogènes, tellement séduisante était l'idée de pouvoir réaliser le mariage absolu entre des matériaux plastiques et des objets métalliques. Cet objectif supposait de pouvoir obtenir, par électro-greffage, des chaînes polymères greffées de haut poids moléculaire, à l'instar de ce qui était obtenu en chimie macromoléculaire traditionnelle, et donc une croissance des chaînes préservée.

Cette croissance étant ionique - et notamment anionique lorsque l'électro-greffage est réalisé sous polarisation cathodique -, il a été admis que les traces d'eau, et plus généralement les protons labiles des solvants protiques et/ou de tout composé se comportant comme un acide de Brönsted dans le milieu réactionnel, constituent des sources de protons préjudiciables à la croissance des chaînes greffées. Par solvant, on entendra ici le milieu électrolytique complet dans lequel l'électro-greffage est effectué, et contenant notamment un liquide essentiellement spectateur de permittivité suffisante pour permettre la solubilisation d'un sel et assurer une conduction électrique dans la phase liquide, un sel ou électrolyte support, ainsi que d'éventuels additifs (et notamment, dans le cas présent, l'eau).

En effet, avant même que les mécanismes réactionnels de l'électro-greffage de monomères vinyliques aient été compris, ce point technique bloquant avait été clairement identifié par l'Homme de l'Art, comme en témoignent les détails des différents procédés mis au point sur la base de ces composés :
- dans la demande de brevet FR-A-2 480 314, les auteurs mentionnent un procédé d'électro-greffage de monomères vinyliques consistant à préparer une solution ayant une teneur en eau au plus égale à 10⁻³ mol/l, et précisent même, dans un mode privilégié de réalisation, que cette teneur en eau doit au plus être égale à 5.10⁻⁴ mol/l;
- dans la demande de brevet EP-A-0 618 276, les auteurs mentionnent un procédé d'électro-greffage de monomères vinyliques mettant en oeuvre un solvant aprotique ;
- dans la demande de brevet EP-A-0 665 275, les auteurs mentionnent également un procédé d'électro-greffage de monomères vinyliques mettant en oeuvre des solvants organiques aprotiques. En outre, la partie descriptive de cette demande antérieure précise que la teneur en eau du bain d'électrolyse est de préférence inférieure à 10⁻³ M. Ainsi, et avant l'électrolyse, le bain d'électrolyse est dégazé par bullage avec un gaz inerte contenant au maximum 5 ppm d'eau et 10 ppm d'oxygène ;
- dans le brevet américain n°6,180,346, les auteurs utilisent un procédé d'électropolymérisation de molécules comportant des substituants vinyliques. A titre d'exemple, ils citent l'utilisation d'acétonitrile comme solvant et précisent que celui-ci doit être séché avant utilisation, ce qui - pour l'Homme de l'Art - traduit une teneur en eau résiduelle de l'ordre de quelques dizaines de ppm au plus ;
- dans le brevet US 5,578,188, les auteurs revendiquent un procédé de dépôt d'un film composite par électropolymérisation sur une surface conductrice de l'électricité selon lequel un mélange comprenant : (a) un monomère précurseur d'un polymère non-conducteur polymère, (b) une substance formant un dopant destinée à être incorporée dans ce polymère, (c) un électrolyte support, et (d) un solvant aprotique, ayant argumenté dans la partie descriptive sur la nécessité d'avoir recours à des monomères, électrolytes supports, dopants et solvants respectant les contraintes d'aproticité nécessaires à la réaction ;
- et enfin, dans les brevets US 6,325,911 et US 6,375,821, les auteurs décrivent des procédés de greffage de polymères sur des substrats carbonés ou des particules par électro-polymérisation de monomères vinyliques au moyen d'un mélange électro-conducteur comprenant : (a) au moins un monomère capable de former un polymère sur le substrat, (b) un solvant aprotique, et (c) un électrolyte pour augmenter la conductivité électrique du mélange. Les exemples de réalisation font état de situations expérimentales dans lesquelles l'ensemble des réactifs liquides utilisés a été purifié, notamment par distillation ou par séjour sur des desséchants puissants, de façon à rendre le milieu aprotique.

Les teneurs en eau très faibles requises par l'électro-greffage de monomères vinyliques sont en général maintenues, selon l'enseignement des documents de l'art antérieur cité ci-dessus, pendant ou avant la synthèse, via un barbotage de gaz inerte (azote, et argon, ...) sec, dont la teneur en eau est de l'ordre de quelques ppm, voire en réalisant les électrolyses dans des enceintes fermées du type boite à gants, mises sous atmosphère contrôlée d'argon ou d'azote.

Pour des raisons analogues de maîtrise de la teneur en sources de protons dans le milieu réactionnel, seuls des solvants aprotiques, et des monomères qui sont eux-mêmes aprotiques - c'est-à-dire qui ne comportent pas de groupements fonctionnels ayant des fonctions acides (au sens de Brönsted) dans le solvant d'étude - ont été proposés pour l'obtention de films organiques électro-greffés.

Dans la pratique, la teneur en eau de ces solvants est abaissée au prix d'une préparation longue et fastidieuse, par exemple via un séjour sur des composés déshydratants comme le pentoxyde de phosphore (P₂O₅) ou sur des tamis moléculaires (par exemple de porosité 0.4 nm (4 Angströms)), *via* une distillation sous pression réduite de gaz rares inertes (azote, et argon, ...) ou via une combinaison de ces méthodes. On note ainsi :
- dans les demandes de brevet FR-A-2 480 314 et EP-A-0 618 276, que les auteurs préconisent l'utilisation d'un solvant organique aprotique ne donnant pas de réaction parasite avec le monomère utilisé ;
- dans la demande de brevet EP-A-0 665 275, outre le fait de mentionner l'utilisation de solvants aprotiques, que les auteurs déclinent les structures monomères utilisables, et précisent que les éventuels groupements fonctionnels protiques du ou des monomères doivent être préalablement masqués.

Dans la pratique, les monomères utilisés pour l'électro-synthèse sont distillés avant usage, de façon à éliminer différents additifs, et notamment les inhibiteurs de polymérisation ajoutés par le fabricant pour stabiliser le produit et éviter sa polymérisation dans la bouteille en conditions de stockage.

On notera seulement que la demande de brevet EP-A-0 665 275 mentionne l'utilisation d'inhibiteurs spécifiques pour pouvoir introduire de nouvelles fonctionnalités au bout des chaînes polymères en croissance. Toutefois, il a été démontré, notamment dans l'article de C. Bureau *et al.,* 1996 (pré-cité), que la croissance des chaînes polymères sur la surface est nécessairement anionique, et il est probable que les inhibiteurs radicalaires introduits par les auteurs se retrouvent dans le film en fin de synthèse parce qu'ils sont adsorbés et/ou réduits sur la surface de l'électrode (ils sont en général électro-actifs), et non parce qu'ils interrompent la croissance des chaînes comme indiqué dans la demande de brevet EP-A-0 665 275.

De fait, des résultats tout à fait intéressants - notamment en termes d'homogénéité - ont été obtenus dans l'électro-greffage de polymères sur métaux en travaillant à partir de solutions rigoureusement aprotiques et dans des atmosphères contrôlées.

Cependant, quelles que soient les sources bibliographiques, ces résultats ne font état que de films électro-greffés ultra-minces, typiquement d'une épaisseur comprise entre quelques nanomètres et quelques dizaines de nanomètres au mieux. Il est important d'insister sur le fait qu'il s'agit là d'épaisseurs de films réellement électro-greffés sur la surface, c'est-à-dire de films issus de l'étape n°1 du SCHÉMA 1 décrit ci-dessus. Le polymère formé en solution, selon l'étape n°2 de ce schéma, et qui peut se déposer sur la surface en cours d'électrosynthèse, est en général facilement éliminé par rinçage de la surface avec un solvant dudit polymère, éventuellement sous ultra-sons, alors que le polymère électro-greffé résiste à ce traitement.

Même si ces gammes d'épaisseur présentent déjà un intérêt pour certaines applications, on constate dans le même temps un besoin réel d'amélioration des conditions de synthèse pour augmenter les épaisseurs accessibles et/ou pour obtenir un meilleur contrôle et une meilleure reproductibilité des faibles épaisseurs, notamment dans la gamme comprise entre 10 nm et 1 µm, et accessoirement accéder à ces gammes d'épaisseur avec des conditions de synthèse moins drastiques que celles retenues jusqu'ici, pour pouvoir être applicables industriellement.

Le brevet US 3,759,797 fait état de l'obtention de films polymères sur des surfaces conductrices de l'électricité sur la base de formulations contenant notamment des monomères vinyliques et des additifs de type thiols ou alcools à courtes chaînes (et notamment de l'éthanol) ou de quinones. Les auteurs de cette invention mentionnent que ces additifs permettent de limiter la polymérisation en solution, et - corrélativement - de renforcer les réactions de croissance à partir de la surface. Si les exemples de réalisation de ce brevet montrent la diminution de la quantité de polymère formé en solution, ils ne permettent pas de juger du comportement - notamment en épaisseur - de la partie demeurant sur la surface, puisque aucune caractérisation de la surface ni aucune mesure d'épaisseur du revêtement obtenu ne sont réalisées. En outre, les précisions techniques sont insuffisantes pour juger des conditions effectives de teneur en eau du milieu.

Toutefois, les Inventeurs ont constaté que l'inclusion d'alcools à courtes chaînes (et notamment d'éthanol) dans la formulation du bain réactionnel utilisé pour réaliser l'électro-greffage ne permet ni d'augmenter les épaisseurs des films obtenus, ni de les contrôler. On observe au contraire que les épaisseurs des films obtenus sont de plus en plus faibles à mesure que la concentration en éthanol augmente, ce qui est conforme à l'interprétation « traditionnelle » de l'effet d'additifs protiques (comme l'éthanol) sur des réactions de polymérisation anionique.

C'est donc afin de remédier à l'ensemble de ces inconvénients majeurs et de pourvoir à un procédé de formation d'un film polymère sur une surface conductrice ou semi-conductrice de l'électricité permettant en particulier de contrôler l'épaisseur des films obtenus qui soit facile à mettre en oeuvre d'un point de vue industriel que les Inventeurs ont mis au point ce qui fait l'objet de l'Invention.

Les Inventeurs ont maintenant mis au point des formulations du bain réactionnel utilisé pour l'électro-greffage, grâce auxquelles ils parviennent à obtenir des films organiques électro-greffés sur des surfaces conductrices ou semi-conductrices de l'électricité d'épaisseurs supérieures à celles obtenues dans les - et inaccessibles aux - conditions habituelles.

A l'encontre des préjugés jusqu'ici en vigueur dans ce domaine, les formulations de l'Invention comprennent toutes une source de protons choisie parmi les composés qui sont des acides de Brönsted dans la solution électrolytique, tels que l'eau notamment, dans des proportions sélectionnées, comprises entre 50 et 100 000 ppm, par rapport aux autres constituants du bain réactionnel. Le choix de la source en protons et la sélection de leur gamme de concentration dans le bain réactionnel permettent en outre d'opérer un contrôle strict des épaisseurs obtenues : ce contrôle s'avère inédit pour les films dits « épais » (épaisseurs supérieures à 10 nm), et meilleur que celui accessible en milieu strictement anhydre pour les films ultra-minces (< 10 nm).

La présente Invention a donc pour premier objet un procédé de formation d'un film polymère sur une surface conductrice ou semi-conductrice de l'électricité par électro-greffage, caractérisé par le fait qu'il consiste :
a) à préparer une solution électrolytique comprenant un ou plusieurs monomères électro-polymérisables, et au moins une source de protons choisie parmi les composés qui sont des acides de Brönsted dans ladite solution électrolytique, ladite source de protons étant présente en une quantité comprise entre 50 et 100 000 ppm, par rapport à la quantité totale des constituants de ladite solution électrolytique ; et
b) à électrolyser ladite solution dans une cellule d'électrolyse en utilisant la surface conductrice ou semi-conductrice à recouvrir comme électrode de travail et au moins une contre-électrode, pour conduire, par électro-réduction ou électro-oxydation de ladite solution, à la formation d'un film polymère électrogreffé sur ladite surface.

Au sens de la présence Invention, on entend par acide de Brönsted, toute substance qui, au sein de la solution électrolytique mise en oeuvre conformément au procédé défini ci-dessus, comporte au moins un groupement fonctionnel porteur d'au moins un proton labile (ou au moins un isotope labile tel que le deutérium ou le tritium) et qui soit partiellement (acide faible) ou totalement (acide fort) ionisé, voire dissocié, dans ladite solution pour donner la base conjuguée du composé et un proton (respectivement : deutérium ou tritium) solvaté. Dans l'eau, un composé est facilement repéré comme un acide de Brönsted par sa constante d'acidité, ou pKa : sont des acides de Brönsted les composés qui constituent la forme acide de couples ayant un pKa inférieur à 14 (les acides étant faibles (partiellement dissociés) si leur pKa est compris entre 0 et 14, et forts (totalement dissociés) si leur pKa est négatif). Dans un solvant organique dont la molécule constitutive contient des protons (respectivement du deutérium ou du tritium), on peut considérer qu'un composé est un acide de Brönsted si son pKa dans ce solvant est inférieur au produit d'auto-protolyse du solvant. Il est par exemple illustré, dans l'article de G. Deniau *et al.,* 1998, Journal of Electroanalytical Chemistry, **451**, 145, que le 2-buténenitrile est un acide de Brönsted faible dans l'acétonitrile. Dans certains cas favorables, des modèles théoriques permettent d'établir une correspondance entre les échelles de pKa dans l'eau et leurs équivalents dans un solvant organique donné, ce qui permet de tirer parti des données de la littérature, puisque les pKa de nombreux composés dans l'eau sont aujourd'hui disponibles. Des modèles théoriques encore, basés sur la chimie quantique, permettent également de calculer le pKa de certains couples acide-base dans des solvants variés, comme cela est illustré dans l'article de G. Deniau *et al.,* (précité). Lorsque la solution électrolytique contient d'autres molécules, comme par exemple un électrolyte support ou des monomères électropolymérisables...etc, il est préférable de recourir à la mesure - directe ou indirecte - de la teneur en protons générée du fait de l'introduction dans le milieu de l'acide de Brönsted présumé. Ceci peut être réalisé par une mesure à l'aide d'un conductimètre (mesure du changement de conductivité de la solution) ou d'un dispositif de Karl Fisher. C'est également une façon permettant de déterminer le caractère acide de Brönsted d'un composé dans un solvant dont la structure moléculaire ne comporte pas de protons.

Parmi les acides de Brönsted pouvant être utilisés conformément au procédé conforme à l'Invention, on peut tout particulier citer l'eau, ainsi que les composés qui sont des acides de Brönsted dans l'eau tels que les acides faibles tels que par exemple le fluorure d'hydrogène, le fluorure d'ammonium, l'acide nitreux, les molécules porteuses de groupements acide carboxylique (tels que l'acide acétique, l'acide citrique, les acides aminés et les protéines...), de groupements ammonium, amine, pyridinium, et phénol, et les acides forts (tels que par exemple l'acide sulfurique, l'acide nitrique, le chlorure d'hydrogène et l'acide perchlorique), les molécules porteuses de groupements sulfuriques, sulfoniques, et sulfhydryques.

Selon ce procédé, les monomères électropolymérisables sont de préférence choisis parmi les monomères vinyliques activés et les molécules cycliques clivables par attaque nucléophile répondant respectivement aux formules (I) et (II) suivantes : 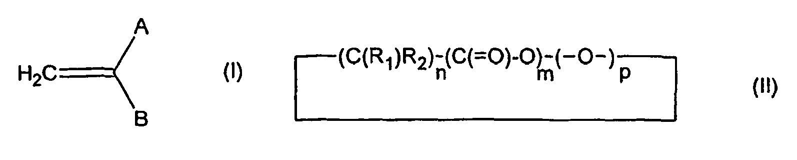 dans lesquelles :
- A, B, R₁ et R₂, identiques ou différents, représentent un atome d'hydrogène ; un groupement alkyle en C₁-C₄ ; un groupement nitrile ; une fonction organique choisie parmi les fonctions hydroxyle, amine : -NHₓ avec x = 1 ou 2, thiol, acide carboxylique, ester, amide : -C(=O)NH_{y} dans laquelle y = 1 ou 2, imide, imidoester, halogénure d'acide : -C(=O)X dans laquelle X représente un atome d'halogène choisi parmi le fluor, le chlore, le brome et l'iode, anhydride d'acide : -C(=O)OC(=O), nitrile, succinimide, phtalimide, isocyanate, époxyde, siloxane : -Si(OH)_{z} dans laquelle z est un nombre entier compris entre 1 et 3 inclusivement, benzoquinone, carbonyle-dümidazole, para-toluène sulfonyle, para-nitrophényl chloroformiate, éthylénique et vinylique, aromatique et notamment toluène, benzène, halogéno-benzène, pyridine, pyrimidine, styrène ou halogéno-styrène et leurs équivalents substitués ; un groupement fonctionnel pouvant complexer des cations et notamment des cations de métaux réductibles tels que par exemple le cuivre, le fer et le nickel ; les structures moléculaires substituées et/ou fonctionnalisées à partir de ces groupements fonctionnels ; les groupements clivables par activation thermique ou photonique comme les sels de diazonium, les peroxydes, les nitroso anilides, les alkoxyamines et notamment le 2,2,6,6-tetraméthyl-1-pipéridinyloxy (TEMPO), la benzophénone et ses dérivés, les dithioesters, les dithiocarbamates, les trithiocarbonates ; les groupements électro-actifs et notamment les précurseurs de polymères conducteurs comme l'aniline, le thiophène, le méthyl thiophène, le bis thiophène, le pyrrole, l'éthylène dioxothiophène (EDOT) et analogues ainsi que les groupements électro-clivables comme les sels de diazonium, les sels de sulfonium, les sels de phosphonium et les sels d'iodonium ; ainsi que les mélanges des monomères et groupements pré-cités ;
- n, m et p, identiques ou différents, sont des nombres entiers compris entre 0 et 20 inclusivement.

Dans la notation ci-dessus, R₁ et R₂ sont des groupements qui dépendent implicitement d'un indice i non indiqué, i étant compris entre 0 et n. Ceci exprime le fait que les groupements R₁ et R₂ peuvent être en fait différents d'un (C(R₁)R₂) à l'autre dans la structure des molécules cycliques de formule (II), c'est-à-dire que la notation (C(R₁)R₂)ₙ employée ne fait pas référence à la répétition du même motif (C(R₁)R₂), mais à la succession de groupements de type (C(R₁)R₂), où les R₁ et R₂ font partie de la liste ci-dessus.

Parmi les groupements fonctionnels des monomères vinyliques activés de formule (I) ci-dessus pouvant complexer des cations, on peut en particulier citer les amides, les éthers, les carbonyles, les carboxyles et carboxylates, les phosphines, les oxydes de phosphines, les thio-éthers, les disulfures, les urées, les éther-couronnes, les aza-couronnes, les thio-couronnes, les cryptands, les sépulcrates, les podands, les porphyrines, les calixarènes, les bipyridines, les terpyridines, les quinoléines, les composés de l'orthophénantroline, les naphtols, les iso-naphtols, les thiourées, les sidérophores, les antibiotiques, l'éthylène glycol et les cyclodextrines.

Parmi les monomères vinyliques activés de formule (I) ci-dessus, on peut en particulier citer l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle, les acrylamides et notamment les méthacrylamides d'amino-éthyle, propyle, butyle, pentyle et hexyle, les cyanoacrylates, les di-acrylates ou di-méthacrylates, les tri-acrylates ou tri-méthacrylates, les tétra-acrylates ou tétra-méthacrylates (tels que le penta-érythritol tétraméthacrylate), l'acide acrylique, l'acide méthacrylique, le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle, de méthacryloyle, le di-vinylbenzène (DVB), et plus généralement les agents réticulants vinylique ou à base d'acrylate, de méthacrylate, et de leur dérivés.

Parmi les molécules cycliques clivables de formule (II) ci-dessus, on peut en particulier citer les époxydes, les lactones et notamment les butyrolactones, l'ε-caprolactone et ses dérivés, l'acide lactique, l'acide glycolique, les oxiranes, ainsi que leurs mélanges et leurs dérivés.

La concentration en monomères électropolymérisables au sein de la solution électrolytique selon le procédé conforme à l'Invention est variable d'un monomère à un autre. Cependant cette concentration est de préférence comprise entre 0,1 et 10 mol/l et encore plus préférentiellement entre 0,1 et 5 mol/l.

Selon une forme particulière de réalisation du procédé conforme à l'Invention, la solution électrolytique peut comprendre en outre au moins un liquide additionnel (solvant) essentiellement spectateur (c'est-à-dire n'intervenant pas dans la réaction d'électropolymérisation) destiné à solubiliser le ou les monomères électropolymérisables qui ne seraient pas ou peu solubles dans l'eau afin de leur permettre de se mouvoir pour se rencontrer. Cependant, il est néanmoins important de noter que la présence d'un tel liquide n'est pas toujours nécessaire car on peut envisager des situations où le ou les monomères utilisés sont utilisés purs, ou bien où certains des monomères d'un mélange de monomères servent de solvant, ou bien où tous les monomères d'un mélange de monomères sont en proportions miscibles.

Lorsqu'ils sont utilisés, ces solvants sont de préférence choisis parmi la diméthylformamide, l'acétate d'éthyle, l'acétonitrile, le tétrahydrofuranne, le dichloroéthane et plus généralement les solvants chlorés.

Le procédé conforme à l'Invention présente l'avantage de permettre l'utilisation directe de ces solvants sans qu'il ne soit nécessaire de les soumettre à une distillation préalable afin d'éliminer l'eau qu'ils contiennent, ni d'effectuer un contrôle rigoureux de la teneur en eau de l'atmosphère au-dessus du milieu réactionnel. De ce fait, le procédé conforme à l'Invention peut facilement être mis en oeuvre à l'échelle industrielle.

De la même façon, selon une autre forme de réalisation du procédé conforme à l'Invention, la solution électrolytique peut également renfermer au moins un électrolyte support de façon à assurer et/ou à améliorer le passage du courant dans la solution électrolytique. L'utilisation d'un électrolyte support n'est cependant pas obligatoire, par exemple dans le cas où le monomère électropolymérisable utilisé comporte lui-même des groupements ioniques (comme par exemple le chlorure d'ammonium de l'aminohexyl méthacrylate) qui assurent alors le maintien de la chute ohmique du circuit électrique à une valeur acceptable.

Lorsqu'ils sont utilisés, les électrolytes supports sont de préférence choisis parmi les sels d'ammoniums quaternaires tels que les perchlorates, les tosylates, les tetrafluoroborates, les hexafluorophosphates, les halogénures d'ammoniums quaternaires, le nitrate de sodium et le chlorure de sodium.

Parmi ces sels d'ammoniums quaternaires on peut en particulier citer à titre d'exemple le perchlorate de tetraéthylammonium (TEAP), le perchlorate de tetrabutylammonium (TBAP), le perchlorate de tetrapropylammonium (TPAP), le perchlorate de benzyltriméthylammonium (BTMAP).

Comme indiqué plus haut, les solutions électrolytiques mises en oeuvre selon le procédé conforme à la présente invention ont la particularité de comprendre une proportion d'acide de Brönsted comprise entre 50 et 100 000 ppm par rapport à la quantité totale des constituants de ladite solution électrolytique. Le choix de la concentration en acide de Brönsted est de préférence déterminé expérimentalement, car cette concentration dépend en général de la nature chimique du ou des monomère(s) électrolymérisable(s) utilisé(s), de la nature de la surface conductrice ou semi-conductrice sur laquelle l'électro-greffage est réalisé, de la nature de l'électrolyte support éventuel, du liquide spectateur éventuel et de la concentration relative de ces différents composés dans le mélange réactionnel.

Un bon point de départ peut consister à se baser sur un type de protocole opératoire typique des électro-greffages réalisés en milieu aprotique. En effet, les Inventeurs ont pu constater, de façon tout à fait inattendue et surprenante, que les épaisseurs des films électro-greffés obtenus à partir de tels modes opératoires pouvaient être significativement plus importantes en présence de teneurs en eau supérieures. Le plus souvent, il est même observé un effet cumulatif, si bien que l'on peut utiliser les meilleurs modes opératoires mis au point en conditions aprotiques, et améliorer encore leur capacité à produire des films d'épaisseur importante et contrôlée grâce à une optimisation de la teneur en eau.

De façon tout particulièrement préférentielle, cette teneur en acide de Brönsted est comprise entre 50 et 10 000 ppm.

Selon l'Invention la surface conductrice ou semi-conductrice de l'électricité est de préférence une surface d'inox, d'acier, de fer, de cuivre, de nickel, de cobalt, de niobium, d'aluminium (notamment lorsqu'il est fraîchement brossé), d'argent, de titane, de silicium (dopé ou non), de nitrure de titane, de tungstène, de nitrure de tungstène, de tantale, de nitrure de tantale ou une surface métallique noble choisie par les surfaces d'or, de platine, d'iridium ou de platine iridié ; les surfaces d'or étant particulièrement préférées selon l'Invention.

Le procédé conforme à l'Invention peut notamment être utilisé pour obtenir des films polymères greffés d'épaisseur contrôlée avec une grande précision : les films électro-greffés présentent un grand intérêt pour la fabrication de puces à ADN, car ils sont intrinsèquement des isolants électriques. Dans le cas où ils sont utilisés pour fixer des oligonucléotides dont l'hybridation est destinée à être détectée par voie optique (fluorescence), leur épaisseur doit être contrôlée avec grande précision : elle doit être de l'ordre de la centaine à quelques centaines de nanomètres et ajustée avec une précision de plus ou moins 5 nanomètres, de façon à optimiser la récupération de l'intensité de fluorescence et minimiser l'absorption optique par le substrat. Les films électro-greffés peuvent être également utilisés comme « velcro » moléculaire pour l'accrochage de couches plus épaisses, via différents types de liaisons : accrochage d'une couche « réservoir » de molécules de médicaments pour effectuer un relargage contrôlé (par exemple sur des stents ou implants vasculaires), accrochage de couches, notamment minérales, par marcottage chimique ou électrochimique (notamment pour la minéralisation de surfaces d'implants comme les implants osseux, ou encore la métallisation de surface en micro-électronique, dans la réalisation de "seed-layers" pour le procédé Damascene de l'interconnexion cuivre), accrochage de couches polymères par thermofusion sur une couche électro-greffée (pour le collage à basse température de polymères sur des métaux)... Dans ces cas, la réactivité chimique, la longueur d'interdigitation ou la température de transition vitreuse constituent, respectivement, les paramètres permettant d'obtenir un bon accrochage via des films électro-greffés. Or, dans tous ces exemples d'application, ces paramètres sont corrélés à l'épaisseur du film électro-greffé servant de "velcro", et atteignent des valeurs intéressantes pour des films ayant une épaisseur supérieure, typiquement, à 100 nm.

Selon le procédé conforme à l'Invention, l'électrolyse de la solution électrolytique peut être réalisée par polarisation en conditions voltammétriques, potentiostatiques ou intensiostatiques.

Le greffage et la croissance du film ont lieu sur la cathode dès que son potentiel est supérieur, en valeur absolue, au potentiel d'électro-réduction du ou des monomères électropolymérisables utilisés.

La présente Invention a par ailleurs pour objet les surfaces conductrices ou semi-conductrices de l'électricité obtenues en mettant en oeuvre le procédé décrit ci-dessus et dont au moins une face est recouverte par un film polymère électrogreffé.

De manière générale, ce revêtement a une épaisseur comprise entre et 10 nm et 10 µm. De façon très surprenante et ainsi que cela est démontré dans les exemples ci-après, ces épaisseurs sont significativement plus importantes que celle des films électro-greffés obtenus en mettant en oeuvre les mêmes monomères électropolymérisables selon un procédé d'électropolymérisation réalisé en conditions aprotiques ou anhydres.

Selon une forme de réalisation préférée de l'Invention, ce revêtement présente une épaisseur comprise entre 100 nm et 10 µm.

Outre les dispositions qui précèdent, l'Invention comprend encore d'autres dispositions qui ressortiront de la description qui va suivre, qui se réfère à un exemple de formation de films de polyméthacrylonitrile à la surface d'une électrode en or en présence de différentes concentrations en eau comparativement à un procédé non conforme à l'Invention et mettant en oeuvre une solution électrolytique renfermant de l'éthanol, à un deuxième exemple de formation d'un film de polyméthacrylonitrile à la surface d'une électrode d'or en présence d'eau, à un exemple décrivant l'effet de la teneur en monomères de méthacrylonitrile sur l'épaisseur des films formés en présence d'eau, à un exemple décrivant l'étude de l'influence de teneur en eau lors de la formation d'un film de polyméthacrylonitrile à la surface d'une électrode d'or en présence d'eau, à un exemple relatant l'effet de la concentration en électrolyte support sur l'épaisseur de films de polyméthacrylonitrile obtenus sur une électrode d'or en présence d'eau, ainsi qu'aux figures annexées dans lesquelles :

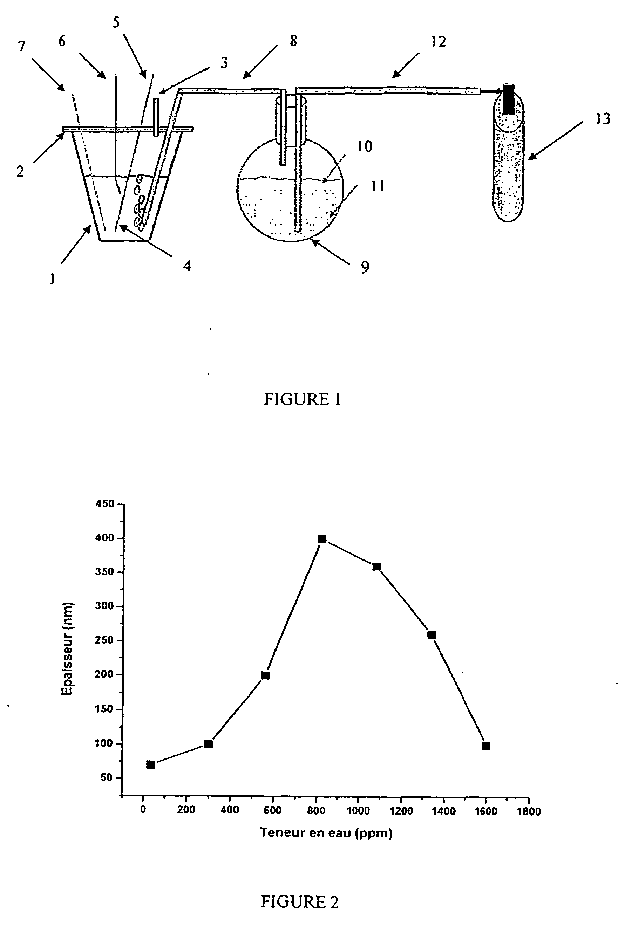

- la figure 1 représente le montage utilisé pour recouvrir une électrode d'or d'un film de polyméthacrylonitrile en présence d'eau. Ce montage comprend une cellule d'électrolyse étanche (1) munie d'un couvercle (2) traversé par un évent (3), renfermant une solution électrolytique (4) ainsi qu'une électrode de travail en or (5), une électrode de référence Ag+/Ag (6) et une contre-électrode de platine (7). La solution électrolytique subit un barbotage continu d'argon (8) passant préalablement dans une garde (9) contenant de la solution électrolytique (10) et des tamis moléculaires (11), ladite garde subissant elle-même un barbotage d'argon (12,13) ;
- la figure 2 représente les épaisseurs (en nm) de films de polyméthacrylonitrile obtenus par électropolymérisation de monomères de méthacrylonitrile sur des lames d'or en fonction de différentes teneurs en eau (en ppm);
- la figure 3 représente la transmittance (en %) de la bande d'absorption infrarouge des fonctions nitriles de films de polyméthacrylonitrile obtenus par électropolymérisation de monomères de méthacrylonitrile sur des électrodes d'or en fonction de la teneur en éthanol (en ppm) ;
- la figure 4 représente l'épaisseur (en Angströms) de films de polyméthacrylonitrile obtenus par électropolymérisation sur des lames d'or à différentes concentrations de monomères de méthacrylonitrile (losanges : 0,1 mol/l ; carrés : 1 mol/l ; triangles : 2,5 mol/l et ronds : 9,54 mol/l) en fonction de la teneur en eau (en ppm) ;
- la figure 5 représente l'épaisseur (en Angströms) de films de polyméthacrylonitrile obtenus par électropolymérisation sur des lames d'or pour différentes concentrations d'électrolytes support (TEAP) dans la solution d'électrolyse en fonction de teneur en eau (en ppm).

### EXEMPLE 1 : FORMATION DE FILMS DE POLYMETHACRYLONITRILE (PMAN) EN PRESENCE DE DIFFERENTES CONCENTRATIONS EN EAU - COMPARAISON AVEC UN PROCEDE METTANT EN OEUVRE DE L'ETHANOL

On illustre par cet exemple l'obtention de filins électro-greffés d'épaisseur plus importante pour des teneurs en eau supérieures à 50 ppm qu'en conditions anhydres, et même l'obtention de films ayant une épaisseur de 400 nm pour une teneur en eau comprise entre 800 et 1000 ppm, qui est inaccessible dans des conditions anhydres. On montre également que ce mode de réalisation permet de simplifier considérablement l'environnement technique de réalisation, puisque les films du présent exemple sont obtenus hors boîtes à gants.

Ces synthèses sont effectuées à partir de solutions dans la diméthyl formamide (DMF) distillée sous argon, contenant 10⁻² mol/l de TEAP et 2,5 mol/l de méthacrylonitrile (MAN) distillé sous argon, dans lesquelles on trempe l'électrode de travail (une lame portant une couche d'or obtenue par pulvérisation sur une lame de verre), une contre-électrode en platine, et une électrode de référence basée sur le couple Ag⁺/Ag. Plusieurs synthèses sont réalisées à partir du même bain, avec ouverture répétée de la cellule pour introduire les nouvelles lames à revêtir. Après chaque synthèse, on réalise un prélèvement de la solution électrolytique, dont on va mesurer la teneur en eau à l'aide d'un appareil de Karl-Fisher. La teneur en eau initiale de la solution de synthèse est de 35 ppm ; cette quantité d'eau étant celle naturellement présente dans la DMF commerciale utilisée. Le montage utilisé pour réaliser les synthèses est représenté sur la figure 1 annexée. Sur cette figure, une cellule étanche renfermant la solution électrolytique et contenant l'électrode de travail (Travail), l'électrode de référence (Réf. Ag⁺/Ag) et la contre-électrode de platine (Contre Pt) subit un barbotage d'argon continu passant préalablement dans une garde contenant des tamis moléculaires de 4 Angströms (zéolithe anhydre) préalablement activés par un séjour d'une semaine dans un four à 350°C.

On introduit successivement 6 lames d'or n'ayant pas vu d'atmosphère contrôlée à l'issue de leur préparation. L'introduction a lieu en ouvrant le couvercle de la cellule, en pinçant la lame avec une pince crocodile puis en refermant le couvercle. Chaque opération dure environ 30 secondes, pendant lesquelles le bullage d'argon n'est pas interrompu.

La teneur en eau de la solution électrolytique passe de 35 ppm au début de l'expérience à 1600 ppm au bout deux heures d'expérience environ.

La synthèse est réalisée en effectuant 10 balayages voltammétriques à 100 mV/s entre le potentiel d'équilibre de la solution électrolytique et - 2,8 Vl(Ag+/Ag). La lame est sortie de la cellule, rincée à l'eau pendant 5 minutes sous ultra-sons, puis à l'acétone pendant 5 minutes également sous ultra-sons, puis séchage sous courant d'argon.

L'épaisseur des films est ensuite mesurée par profilométrie.

Les résultats obtenus sont reportés sur la Figure 2 annexée qui montre les épaisseurs des films obtenus (en nm) en fonction des différentes teneurs en eau (en ppm).

Ces résultats démontrent que l'on réussit à obtenir des films de PMAN sur or de 400 nm d'épaisseur (le spectre infra-rouge en réflexion des films obtenus montre que l'on obtient bien un spectre en tous points conforme au PMAN), alors que ceci ne peut être obtenu en ne jouant que sur les paramètres du protocole de synthèse autres que la teneur en eau, tels que la concentration en monomère, le potentiel d'électrode, le nombre de créneaux ou la vitesse de balayage. Ces autres paramètres pourraient certes être eux-mêmes ré-ajustés pour éventuellement améliorer encore l'épaisseur, mais l'on observe que l'ajustement de la teneur en eau permet à lui seul une amélioration bien plus substantielle.

A titre comparatif, la même expérience a été réalisée en remplaçant l'eau de la solution électrolytique par des quantités variables d'éthanol anhydre avec du MAN à 4 mol/l dans la DMF anhydre, en présence de 5.10⁻² mol/l de TEAP. La DMF et l'éthanol utilisés ont préalablement été déshydratés par un séjour prolongé sur des tamis moléculaires de diamètre de pore 4 Å préalablement conditionnés par chauffage au four à 350°C pendant 1 semaine, suivi d'une distillation sous pression réduite d'argon en boîtes à gants. Les teneurs en eau résultantes dans la DMF et dans l'éthanol, mesurées à l'aide d'un appareil de Karl Fisher, sont de 33 ppm pour la DMF et inférieure à 10 ppm pour l'éthanol. Les manipulations ont été effectuées en boîtes à gants sous argon sec, où la teneur en eau de l'atmosphère est inférieure à 15 ppm. Les électrolyses ont été réalisées en conditions voltammétriques, via 10 balayages à 100 mV/s du potentiel d'équilibre (voisin de - 0,7 V/(Ag⁺/Ag)) à - 2,6 V/(Ag⁺/Ag). Les lames ont ensuite été rincées à l'acétone puis séchées sous flux d'argon avant analyse.

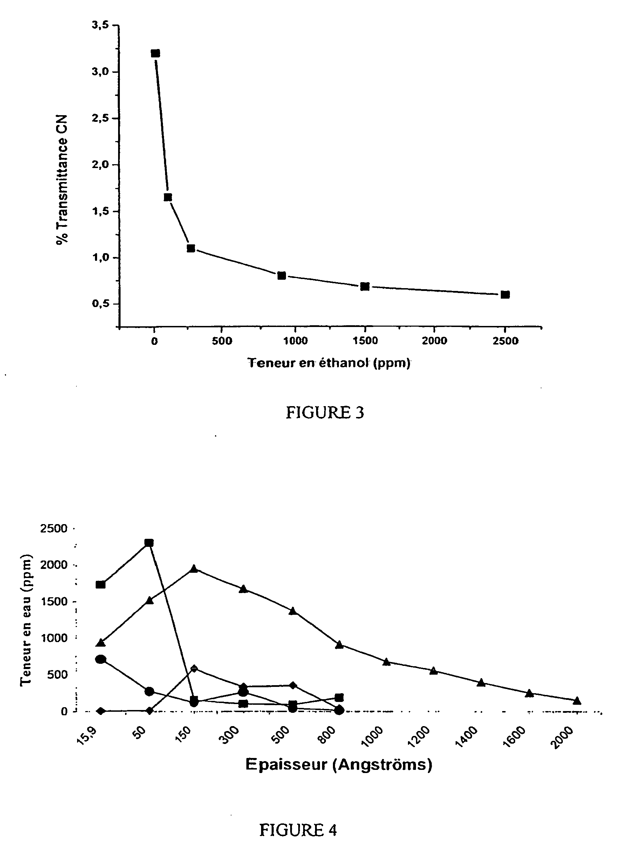

Pour chaque teneur en éthanol, on mesure le pourcentage de transmittance de la bande d'absorption infrarouge des fonctions nitriles vers 2270 cm⁻¹. Les résultats obtenus sont reportés sur la figure 3 sur laquelle la transmittance (en %) est exprimée en fonction de la teneur en éthanol (en ppm).

Ces résultats montrent qu'il n'existe pas d'effet analogue à celui observé pour l'ajout d'eau dans la solution électrolytique : l'ajout d'éthanol conduit à une disparition du film électro-greffé, même aux faibles concentrations.

On constate donc un effet surprenant sous l'effet du rajout d'eau dans le milieu, que les inventeurs attribuent au fait que l'eau est un acide de Brönsted dans le milieu réactionnel. Des teneurs en eau loin des conditions aprotiques et anhydres, permettent de favoriser l'obtention de films électro-greffés d'épaisseur supérieure à ceux obtenus en conditions aprotiques ou anhydres. On observe en effet que le film électro-greffé tend à disparaître pour les teneurs en eau très élevées, conformément à ce qui est connu dans la littérature. L'effet surprenant est qu'avant de décroître, la courbe de la Figure 2, donnant l'épaisseur du film en fonction de la teneur en eau, passe par un maximum pour des teneurs en eau intermédiaires.

Les résultats présentés sur la Figure 3 montrent également que l'effet de l'ajout d'additifs du type alcools ou thiols à courtes chaînes, tel que par exemple décrit dans le brevet US 3,759,797, n'est pas identique à celui décrit selon la présente Invention, puisque l'effet obtenu à la Figure 3 est strictement inverse de celui décrit dans le brevet US 3,759,797. Sans disposer de toutes les informations nécessaires et sans vouloir être liés à une quelconque théorie, les Inventeurs de la présente invention pensent que les caractéristiques du milieu réactionnel utilisé dans le brevet US 3,759,797 sont de nature à favoriser la formation de polymère par polymérisation radicalaire, et que les additifs considérés sont probablement de bons agents de transfert de site actif, et peuvent contribuer à une réticulation du polymère formé et/ou à favoriser les réactions de terminaison.

### EXEMPLE 2 : FORMATION D'UN FILM DE POLYMETHACRYLONITRILE (PMAN) EN PRESENCE D'EAU

L'exemple 1 ci-dessus illustre le fait qu'il est possible, pour une concentration en monomère donnée et un protocole donné, de cibler une gamme d'épaisseur en ajustant la teneur en eau du milieu. On peut noter qu'une solution anhydre (par exemple une solution de DMF distillée sous argon en boîtes à gants) ré-exposée à l'air voit sa teneur en eau évoluer jusqu'à sa valeur de saturation en quelques minutes. Dans l'exemple 1 donné ci-dessus, un barbotage, dans la cellule électrochimique, d'argon préalablement déshydraté par passage dans une garde contenant des tamis moléculaires activés dans une solution de DMF, permet d'allonger la période d'ajustement de la teneur en eau à 2 heures.

Dans le présent exemple, on introduit les tamis moléculaires directement dans la cellule d'électro-greffage. On montre que la régulation de la teneur en eau obtenue est efficace en préparant les solutions de synthèse directement à partir des produits commerciaux, sans distillation ni déshydratation.

Les conditions opératoires, et en particulier les solutions et les protocoles de synthèse, sont les mêmes que pour l'exemple 1 ci-dessus, sauf qu'aucun des réactifs n'est distillé. Les teneurs en eau de la DMF commerciale et du monomère sont mesurées à 150 ppm environ. On introduit dans la cellule électrochimique un tapis d'environ 2 cm de tamis moléculaires 5 Angströms pré-activés à 200°C pendant 1 semaine, puis la solution de synthèse. Une mesure de la teneur en eau réalisée sur un prélèvement effectué au bout de quelques minutes donne une teneur en eau de 30 ppm. La solution est mise sous agitation avec un barreau aimanté pendant toute la période des synthèses.

Un prélèvement effectué au bout de 4 heures révèle une teneur en eau de 328 ppm. On réalise un film de PMAN électro-greffé au bout de 4 heures d'électrolyse : l'épaisseur du film obtenu est de 125 nm, en bon accord avec les résultats obtenus dans l'exemple 1. Tout comme dans l'exemple 1, on n'observe aucun défaut structural sur le spectre IRRAS du film de PMAN ainsi obtenu.

### EXEMPLE 3 : ETUDE DE L'EFFET DE LA TENEUR EN MONOMERES DE MAN LORS DE LA FORMATION D'UN FILM DE PMAN EN PRESENCE D'EAU

Cet exemple a pour but d'illustrer le fait que les gammes d'épaisseur qui peuvent être atteintes en faisant varier la teneur en eau dépendent également de la teneur en monomères, mais que quelle que soit la concentration en monomères, les mêmes tendances sont observées.

On réalise des films de PMAN électro-greffés dans les mêmes conditions opératoires que celles exposées ci-dessus à l'exemple 2, mais avec une concentration initiale en monomères de 5 mol/l et une teneur en TEAP de 5.10⁻² mol/l dans la DMF. Les teneurs en eau sont cette fois ajustées, par ajout d'eau distillée dans le milieu réactionnel, à 300, 500 et 1000 ppm. Les films sont alors réalisés par 10 balayages voltammétriques à 100 mV/s entre le potentiel d'équilibre (voisin de - 1 V/(Ag⁺/Ag)) et - 3,2 V/(Ag⁺/Ag). Les lames ainsi traitées sont rincées dans les mêmes conditions que précédemment.

Les épaisseurs, mesurées au profilomètre, et comparées à celles des films obtenus ci-dessus à l'exemple 1 sont reportées dans le tableau I ci-après :

**TABLEAU I**

| **Teneur en eau** **(ppm)** | **Epaisseur des films (nm)** | |
|---|---|---|
| | **Selon l'exemple 1 (MAN : 2,5 mol/l)** | **Selon l'exemple 2 (MAN : 5 mol/l)** |
| **300** | 100 | 569 |
| **500** | 175 | 612 |
| **1000** | 360 | 37 |

A titre comparatifs, les films de PMAN obtenus dans les mêmes conditions opératoires mais en milieu anhydre ont une épaisseur de l'ordre de 20 à 50 nm environ.

### EXEMPLE 4 : ETUDE DE L'INFLUENCE DE LA TENEUR EN EAU LORS LA FORMATION D'UN FILM DE PMAN

Le but de cet exemple est d'illustrer le fait que les courbes donnant l'épaisseur en fonction de la teneur en eau sont des courbes passant par un maximum, et dont la décroissance au-delà du maximum est lente. Ceci signifie donc d'une part que l'ajout d'eau permet d'augmenter l'épaisseur maximale pouvant être obtenue pour un protocole et une concentration donnés, et d'autre part qu'un meilleur contrôle de l'épaisseur de films électro-greffés est obtenu si le contrôle sur la teneur en eau est effectuée à des concentrations supérieures à celle du maximum.

Pour ce faire, on réalise, sur des lames d'or, des films de PMAN électro-greffés dans les mêmes conditions opératoires que celles exposées ci-dessus à l'exemple n°2, à ceci près que l'on réalise 3 balayages voltammétriques à 200 mV/s entre - 0,7 V/(Ag⁺/Ag) et - 2,6 V/(Ag⁺/Ag). La teneur en eau est ajustée à des teneurs variants entre 0 et 2200 ppm et ce pour différentes concentrations en monomères : 0,1 : 1 ; 2,5 et 9,54 mol/l.

Les résultats obtenus sont reportés sur la figure 4 annexée sur laquelle l'épaisseur obtenue (en Angströms) pour chaque concentration en monomère (losanges: 0,1 mol/l ; carrés : 1 mol/l ; triangles : 2,5 mol/l et ronds : 9,54 mol/l) est exprimée fonction de la teneur en eau (en ppm).

Ces résultats montrent, dans tous les cas, l'existence d'une teneur en eau, supérieure à 50 ppm, pour laquelle l'épaisseur obtenue est supérieure à celle accessible en conditions anhydres. On observe également que les pentes des courbes sont, en valeur absolue, moins fortes au-delà de cette concentration qu'en deçà : c'est donc avec un contrôle de la teneur en eau au-delà de cette concentration - et non en deçà - que l'on peut réaliser un bon contrôle sur les épaisseurs des films obtenus.

La même expérience réalisée sur des lames de nickel conduit aux mêmes observations.

### EXEMPLE 5 : ETUDE DE L'EFFET DE LA CONCENTRATION EN ELECTROLYTE SUPPORT SUR L'EPAISSEUR DE FILMS DE PMAN

Le but de cet exemple est d'illustrer le fait que la position du maximum des courbes épaisseur/teneur en eau peut également dépendre de la présence d'un électrolyte support et de sa teneur au sein de la solution électrolytique. En particulier, on observe que ce maximum est déplacé vers les teneurs en eau plus grandes lorsque la teneur en électrolyte support augmente. Ceci permet d'envisager un meilleur contrôle de la teneur en eau, et donc des épaisseurs de films, en réalisant des formulations plus concentrées en électrolytique support : une solution est d'autant plus hygroscopique que sa teneur en eau est faible. En ayant choisi une teneur en électrolytique support donnée, on peut ajuster la teneur en eau du milieu à la valeur du maximum des courbes épaisseur/teneur en eau, et disposer ainsi de solutions d'autant moins hygroscopiques, et donc d'autant plus stables, que cette teneur en eau est élevée.

On réalise des films de PMAN électro-greffé sur or à l'aide de solutions à 2,5 mol/l en MAN (non distillé) dans la DMF (non distillée). On utilise du TEAP comme électrolyte support. Les solutions sont préparées à partir de TEAP anhydre, et la teneur en eau - mesurée à l'aide d'un appareil de Karl-Fisher - est ajustée par rajout d'eau distillée.

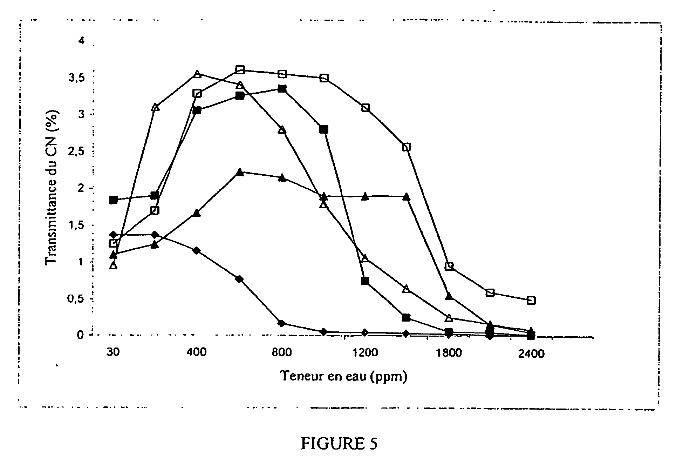

On réalise différents films électro-greffés pour des teneurs en TEAP comprises entre 5.10⁻³ et 5.10⁻¹ mol/l, et des teneurs en eau comprises entre 16 et 2400 ppm. Les épaisseurs sont évaluées à partir de l'intensité du marqueur CN mesurée en ERRAS. Les résultats sont reportés dans la Figure 5 annexée qui représente, pour chaque concentration de TEAP, l'épaisseur des films obtenus (en Angströms) en fonction de la teneur en eau (en ppm). Sur cette figure, les losanges pleins correspondent à la courbe obtenue avec une concentration en TEAP de 5.10⁻³ mol/l, les carrés pleins à la concentration de 1.10⁻² mol/l, les triangles pleins à la concentration de 5.10⁻² mol/l, les carrés vides en bas à la concentration de 1.10⁻¹ mol/l et les triangles vides à la concentration de 5.10⁻¹ mol/l.

## Revendications

1. Procédé de formation d'un film polymère sur une surface conductrice ou semi-conductrice de l'électricité par électro-greffage, **caractérisé par le fait qu'**il consiste :
a) à préparer une solution électrolytique comprenant un ou plusieurs monomères électro-polymérisables, et au moins une source de protons choisie parmi les composés qui sont des acides de Brônsted dans ladite solution électrolytique, ladite source de protons étant présente en une quantité comprise entre 50 et 100 000 ppm, par rapport à la quantité totale des constituants de ladite solution électrolytique ; et
b) à électrolyser ladite solution dans une cellule d'électrolyse en utilisant la surface conductrice ou semi-conductrice à recouvrir comme électrode de travail et au moins une contre-électrode, pour conduire, par électro-réduction ou électro-oxydation de ladite solution, à la formation d'un film polymère électrogreffé sur ladite surface.

2. Procédé selon la revendication 1, **caractérisé par le fait que** les acides de Brönsted sont choisis parmi l'eau ; le fluorure d'hydrogène ; le fluorure d'ammonium ; l'acide nitreux ; les molécules porteuses de groupements acide carboxylique, de groupements ammonium, amine, pyridinium, phénol ; l'acide sulfurique ; l'acide nitrique ; le chlorure d'hydrogène ; l'acide perchlorique et les molécules porteuses de groupements sulfuriques, sulfoniques ou sulfhydriques.

3. Procédé selon la revendication 1 ou 2, **caractérisé par le fait que** les monomères électropolymérisables sont choisis parmi les monomères vinyliques activés et les molécules cycliques clivables par attaque nucléophile répondant respectivement aux formules (I) et (II) suivantes : 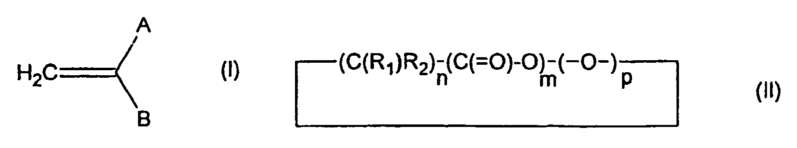 dans lesquelles :
- A, B, R₁ et R₂, identiques ou différents, représentent un atome d'hydrogène ; un groupement alkyle en C₁-C₄ ; un groupement nitrile ; une fonction organique choisie parmi les fonctions hydroxyle, amine : -NHₓ avec x = 1 ou 2, thiol, acide carboxylique, ester, amide : -C(=O)NH_{y} dans laquelle y = 1 ou 2, imide, imidoester, halogénure d'acide : -C(=O)X dans laquelle X représente un atome d'halogène choisi parmi le fluor, le chlore, le brome et l'iode, anhydride d'acide : -C(=O)OC(=O), nitrile, succinimide, phtalimide, isocyanate, époxyde, siloxane : -Si(OH)_{z} dans laquelle z est un nombre entier compris entre 1 et 3 inclusivement, benzoquinone, carbonyle-diimidazole, para-toluène sulfonyle, para-nitrophényl chloroformiate, éthylénique et vinylique, aromatique et notamment toluène, benzène, halogéno-benzène, pyridine, pyrimidine, styrène ou balogéno-styrène et leurs équivalents substitués ; un groupement fonctionnel pouvant complexer des cations ; les structures moléculaires substituées et/ou fonctionnalisées à partir de ces groupements fonctionnels ; les groupements clivables par activation thermique ou photonique ; les groupements électro-actifs ; les groupements électro-clivables ; ainsi que les mélanges des monomères et groupements pré-cités ;
- n, m et p, identiques ou différents, sont des nombres entiers compris entre 0 et 20 inclusivement.

4. Procédé selon la revendication 3, **caractérisé par le fait que** les monomères vinyliques activés de formule (I) sont choisis parmi l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle, le méthacrylate d'hydroxypropyle, le méthacrylate de glycidyle, les acrylamides, les cyanoacrylates, les di-acrylates ou di-méthacrylates, les tri-acrylates ou tri-méthacrylates, les tétra-acrylates ou tétra-méthacrylates, l'acide acrylique, l'acide méthacrylique, le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle, de méthacryloyle, les agents réticulants vinylique ou à base d'acrylate, de méthacrylate, et de leur dérivés.

5. Procédé selon la revendication 3, **caractérisé par le fait que** les molécules cycliques clivables de formule (II) sont choisies parmi les époxydes, les lactones, l'acide lactique, l'acide glycolique, les oxiranes, ainsi que leurs mélanges et leurs dérivés.

6. Procédé selon l'une quelconque des revendications précédentes, **caractérisé par le fait que** la concentration en monomères électropolymérisables au sein de la solution électrolytique est comprise entre 0,1 et 10 mol/l.

7. Procédé selon l'une quelconque des revendications précédentes, **caractérisé par le fait que** la solution électrolytique comprend en outre au moins un solvant choisi parmi la diméthylformamide, l'acétate d'éthyle, l'acétonitrile, le tétrahydrofuranne, et les solvants chlorés.

8. Procédé selon l'une quelconque des revendications précédentes, **caractérisé par le fait que** la solution électrolytique comprend au moins un électrolyte support.

9. Procédé selon l'une quelconque des revendications précédentes, **caractérisé par le fait que** la teneur en acide de Brônsted est comprise entre 50 et 10 000 ppm.

10. Procédé selon l'une quelconque des revendications précédentes, **caractérisé par le fait que** la surface conductrice ou semi-conductrice de l'électricité est une surface d'inox, d'acier, de fer, de cuivre, de nickel, de cobalt, de niobium, d'aluminium, d'argent, de titane, de silicium, de nitrure de titane, de tungstène, de nitrure de tungstène, de tantale, de nitrure de tantale ou une surface métallique noble choisie par les surfaces d'or, de platine, d'iridium ou de platine iridié.

11. Procédé selon l'une quelconque des revendications précédentes, **caractérisé par le fait que** l'électrolyse de la solution électrolytique est réalisée par polarisation en conditions voltammétriques, potentiostatiques ou intensiostatiques.

12. Surfaces conductrices ou semi-conductrices de l'électricité **caractérisée par le fait qu'**elles sont susceptibles d'être obtenues en mettant en oeuvre le procédé tel que défini à l'une quelconque des revendications 1 à 11 et dont au moins une face est recouverte par un film polymère électro-greffé.

13. Surface selon la revendication 12, **caractérisée par le fait que** le film polymère a une épaisseur comprise entre 10 nm et 10 µm.

## Claims

1. Process for the formation of a polymer film on an electrically conducting or semiconducting surface by electrografting, **characterized in that** it consists:
a) in preparing an electrolytic solution comprising one or more electropolymerizable monomers and at least one source of protons which is chosen from compounds which are Bronsted acids in the said electrolytic solution, the said source of protons being present in an amount of between 50 and 100 000 ppm with respect to the total amount of the constituents of the said electrolytic solution; and
b) in electrolysing the said solution in an electrolysis cell by using the conducting or semiconducting surface to be covered as working electrode and at least one counter electrode, to result, by electroreduction or electro-oxidation of the said solution, in the formation of an electrografted polymer film on the said surface.

2. Process according to Claim 1, **characterized in that** the Bronsted acids are chosen from water; hydrogen fluoride; ammonium fluoride; nitrous acid; molecules carrying carboxylic acid groups or ammonium, amine, pyridinium or phenol groups; sulphuric acid; nitric acid; hydrogen chloride; perchloric acid and molecules carrying sulphuric, sulphonic or thiol groups.

3. Process according to Claim 1 or 2, **characterized in that** the electropolymerizable monomers are chosen from activated vinyl monomers and from cyclic molecules cleavable by nucleophilic attack corresponding respectively to the following formulae (I) and (II): 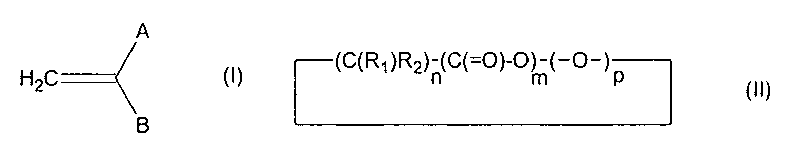 in which:
- A, B, R₁ and R₂, which are identical or different, represent a hydrogen atom; a C₁-C₄ alkyl group; a nitrile group; an organic functional group chosen from the following functional groups: hydroxyl, amine: -NHₓ with x = 1 or 2, thiol, carboxylic acid, ester, amide: -C(=O)NH_{y} in which y = 1 or 2, imide, imidoester, acid halide: -C(=O)X in which X represents a halogen atom chosen from fluorine, chlorine, bromine and iodine, acid anhydride: -C(=O)OC(=O), nitrile, succinimide, phthalimide, isocyanate, epoxide, siloxane: -Si(OH)_{z} in which z is an integer between 1 and 3 inclusive; benzoquinone, carbonyldiimidazole, para-toluenesulphonyl, para-nitrophenyl chloroformate, ethylenic and vinyl, aromatic and in particular toluene, benzene, halobenzene, pyridine, pyrimidine, styrene or halostyrene and their substituted equivalents; a functional group which can complex cations; molecular structures substituted and/or functionalized starting from these functional groups; groups which can be cleaved by thermal or photon activation; electroactive groups; electrocleavable groups; and the mixtures of the abovementioned monomers and groups;
- n, m and p, which are identical or different, are integers between 0 and 20 inclusive.

4. Process according to Claim 3, **characterized in that** the activated vinyl monomers of formula (I) are chosen from acrylonitrile, methacrylonitrile, methyl methacrylate, ethyl methacrylate, butyl methacrylate, propyl methacrylate, hydroxyethyl methacrylate, hydroxypropyl methacrylate, glycidyl methacrylate, acrylamides, cyanoacrylates, diacrylates or dimethacrylates, triacrylates or trimethacrylates, tetraacrylates or tetramethacrylates, acrylic acid, methacrylic acid, styrene and its derivatives, para-chlorostyrene, pentafluorostyrene, N-vinylpyrrolidone, 4-vinylpyridine, 2-vinylpyridine, vinyl halides, acryloyl halides, methacryloyl halides, vinyl crosslinking agents or crosslinking agents based on acrylate, on methacrylate, and on their derivatives.

5. Process according to Claim 3, **characterized in that** the cleavable cyclic molecules of formula (II) are chosen from epoxides, lactones, lactic acid, glycolic acid, oxiranes, and their mixtures and their derivatives.

6. Process according to any one of the preceding claims, **characterized in that** the concentration of electropolymerizable monomers in the electrolytic solution is between 0.1 and 10 mol/l.

7. Process according to any one of the preceding claims, **characterized in that** the electrolytic solution additionally comprises at least one solvent chosen from dimethylformamide, ethyl acetate, acetonitrile, tetrahydrofuran and chlorinated solvents.

8. Process according to any one of the preceding claims, **characterized in that** the electrolytic solution comprises at least one support electrolyte.

9. Process according to any one of the preceding claims, **characterized in that** the content of Bronsted acid is between 50 and 10 000 ppm.

10. Process according to any one of the preceding claims, **characterized in that** the electrically conducting or semiconducting surface is a surface made of stainless steel, steel, iron, copper, nickel, cobalt, niobium, aluminium, silver, titanium, silicon, titanium nitride, tungsten, tungsten nitride, tantalum, tantalum nitride or a noble metal surface chosen from gold, platinum, iridium or iridium platinum surfaces.

11. Process according to any one of the preceding claims, **characterized in that** the electrolysis of the electrolytic solution is carried out by polarization under potentiostatic or galvanostatic voltammetric conditions.

12. Electrically conducting or semiconducting surfaces, **characterized in that** they are capable of being obtained by employing the process as defined in any one of Claims 1 to 11 and have at least one face covered with an electrografted polymer film.

13. Surface according to Claim 12, **characterized in that** the polymer film has a thickness of between 10 nm and 10 µm.

## Patentansprüche

1. Verfahren zur Bildung eines Polymerfilms auf einer elektrisch leitenden oder halbleitenden Oberfläche durch Elektropfropfen, **dadurch gekennzeichnet, dass** es besteht aus:
a) Herstellen einer Elektrolytlösung, die ein elektropolymerisierbares Monomer oder mehrere elektropolymerisierbare Monomere und wenigstens eine Protonenquelle, ausgewählt aus den Verbindungen, die in der genannten Elektrolytlösung Brönsted-Säuren sind, umfasst, wobei die Protonenquelle in einer Menge von zwischen 50 und 100.000 ppm, bezogen auf die Gesamtmenge der Bestandteile der Elektrolytlösung, vorliegt, und
b) Elektrolysieren der Lösung in einer Elektrolysezelle, indem man die zu überziehende leitende oder halbleitende Oberfläche als Arbeitselektrode und wenigstens eine Gegenelektrode verwendet, um durch Elektroreduktion oder Elektrooxidation der Lösung die Bildung eines elektrogepfropften Polymerfilms auf der Oberfläche durchzuführen.

2. Verfahren nach Anspruch 1, **dadurch gekennzeichnet, dass** die Brönsted-Säuren unter Wasser; Fluorwasserstoff; Ammoniumfluorid; salpetriger Säure; Molekülen, die Träger von CarbonsäureGruppen, Ammonium-, Amin-, Pyridinium-, Phenol-Gruppen sind; Schwefelsäure; Salpetersäure; Chlorwasserstoff; Perchlorsäure und Molekülen, die Träger von Sulfat-, Sulfon- oder Thiol-Gruppen (groupements sulfuriques, sulfoniques ou sulfhydriques) sind.

3. Verfahren nach Anspruch 1 oder 2, **dadurch gekennzeichnet, dass** die elektropolymerisierbaren Monomeren ausgewählt werden aus aktivierten Vinylmonomeren und cyclischen Molekülen, die durch nucleophilen Angriff spaltbar sind, die den folgenden Formeln (I) und (II) entsprechen: 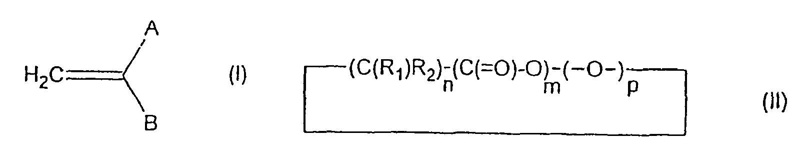 in denen:
- A, B, R₁ und R₂, die identisch oder unterschiedlich sind, ein Wasserstoffatom; eine C₁-C₄-Alkylgruppe; eine Nitrilgruppe; eine organische Funktion, ausgewählt unter den Funktionen: Hydroxyl, Amin: -NHₓ, wobei x = 1 oder 2, Thiol, Carbonsäure, Ester, Amid: -C(=O)NH_{y}, wobei y = 1 oder 2, Imid, Imidoester, Säurehalogenid: -C(=O)X, wobei X ein Halogenatom darstellt, ausgewählt aus Fluor, Chlor, Brom und Jod; Säureanhydrid: -C(=O)OC(=O), Nitril, Succinimid, Phtalimid, Isocyanat, Epoxid, Siloxan: -Si(OH)_{z}, wobei z eine ganze Zahl zwischen 1 und 3, einschließlich, ist, Benzochinon, Carbonyldiimidazol, para-Toluolsulfonyl, para-Nitrophenylchlorformiat, ethylenische und vinylische, aromatische und insbesondere Benzol, Halogenbenzol, Pyridin, Pyrimidin, Styrol oder Halogenstyrol und ihre substituierten Äquivalenten; eine funktionelle Gruppe, die Kationen komplexieren kann; Molekülstrukturen, die ausgehend von diesen funktionellen Gruppen substituiert und/oder funktionalisiert sind; Gruppen, die durch thermische oder photonische Aktivierung spaltbar sind; elektroaktive Gruppen; elektrospaltbare Gruppen; sowie Gemische der vorstehend genannten Monomeren und Gruppen darstellen;
- n, m und p, die identisch oder unterschiedlich sind, sind ganze Zahlen zwischen 0 und 20, einschließlich.

4. Verfahren nach Anspruch 3, **dadurch gekennzeichnet, dass** die aktivierten Vinylmonomeren der Formel (I) aus Acrylnitril, Methacrylnitril, Methylmethacrylat, Ethylmethacrylat, Butylmethacrylat, Propylmethacrylat, Hydroxyethylmethacrylat, Hydroxypropylmethacrylat, Glycidylmethacrylat, Acrylamiden, Cyanoacrylaten, Diacrylaten oder Dimethacrylaten, Triacrylaten oder Trimethacrylaten, Tetraacrylaten oder Tetramethacrylaten, Acrylsäure, Methacrylsäure, Styrol und seinen Derivaten, para-Chlorstyrol, Pentafluorstyrol, N-Vinylpyrrolidon, 4-Vinylpyridin, 2-Vinylpyridin, Halogeniden von Vinyl, Acryloyl, Methacryloyl, Vinyl-Vernetzungsmitteln auf der Basis von Acrylat, Methacrylat und ihren Derivaten ausgewählt werden.

5. Verfahren nach Anspruch 3, **dadurch gekennzeichnet, dass** die spaltbaren cyclischen Moleküle der Formel (II) unter Epoxiden, Lactonen, Milchsäure, Glykolsäure, Oxiranen sowie ihren Gemischen und ihren Derivaten ausgewählt werden.

6. Verfahren nach einem der vorangehenden Ansprüche, **dadurch gekennzeichnet, dass** die Konzentration an elektropolymerisierbaren Monomeren in der Elektrolytlösung zwischen 0,1 und 10 Mol/l liegt.

7. Verfahren nach einem der vorangehenden Ansprüche, **dadurch gekennzeichnet, dass** die Elektrolytlösung außerdem wenigstens ein Lösungsmittel, ausgewählt aus Dimethylformamid, Ethylacetat, Acetonitril, Tetrahydrofuran und chlorierten Lösungsmitteln, umfasst.

8. Verfahren nach einem der vorangehenden Ansprüche, **dadurch gekennzeichnet, dass** die Elektrolytlösung wenigstens einen Elektrolytträger umfasst.

9. Verfahren nach einem der vorangehenden Ansprüche, **dadurch gekennzeichnet, dass** der Gehalt an Brönsted-Säure zwischen 50 und 10.000 ppm liegt.

10. Verfahren nach einem der vorangehenden Ansprüche, **dadurch gekennzeichnet, dass** die elektrisch leitende oder halbleitende Oberfläche eine Inox-, Stahl-, Eisen-, Kupfer-, Nickel-, Kobalt-, Niob-, Aluminium-, Silber-, Titan-, Silicium-, Titannitrid-, Wolfram-, Wolframnitrid-, Tantal-, Tantalnitrid-Oberfläche oder eine Edelmetalloberfläche, ausgewählt aus Gold-, Platin-, Iridium-Oberfläche oder einer Oberfläche von iridiertem Platin, ist.

11. Verfahren nach einem der vorangehenden Ansprüche, **dadurch gekennzeichnet, dass** die Elektrolyse der Elektrolytlösung durch Polarisation unter voltametrischen, potentiostatischen oder intensiostatischen Bedingungen durchgeführt wird.

12. Elektrisch leitende oder halbleitende Oberflächen, **dadurch gekennzeichnet, dass** sie erhalten werden können, indem man das Verfahren, wie es in einem der Ansprüche 1 bis 11 definiert ist, verwendet, und von denen wenigstens eine Seite mit einem elektrogepfropften Polymerfilm bedeckt ist.

13. Oberfläche nach Anspruch 12, **dadurch gekennzeichnet, dass** der Polymerfilm eine Dicke zwischen 10 nm und 10 µm hat.
